# EUROPÄISCHE PATENTSCHRIFT

(11) **EP 0 539 698 B1**
(45) Veröffentlichungstag und Bekanntmachung des Hinweises auf die Patenterteilung: **11.06.1997**
(21) Anmeldenummer: 92115137.9
(22) Anmeldetag: 04.09.1992
(51) Int. Cl.: B65D 19/32, B65D 19/40

(54) **Palette mit Trägerplatte und Kufen**
Pallet with support plate and runners
Palette avec plaque de support et patins

(30) Priorität: 26.10.1991 DE 9113329 U
(43) Veröffentlichungstag der Anmeldung: 05.05.1993
(73) Patentinhaber: Industrie-Anlagen-Planungs GmbH, 71384 Weinstadt (DE)
(72) Erfinder: Stegmaier, Peter, 73630 Remshalden (DE)
(74) Vertreter: Steimle, Josef, Dipl.-Ing.

(56) Entgegenhaltungen:
- EP-A- 0 400 640
- WO-A-83/03398
- DE-A- 2 125 549
- FR-A- 2 139 742
- US-A- 4 403 555
- US-A- 5 094 175
- MECHANICAL HANDLING Bd. 59, Nr. 3, Maerz 1972, Seite 56 "GOODBYE TO TIMBER"

## Beschreibung

Die Erfindung betrifft eine Palette gemäß dem Oberbegriff des Anspruchs 1.

Eine aus der DE 86 00 136 U bekannte Palette ist einstückig gepreßt und weist zur Versteifung und zur Bildung der Standbeine Vertiefungen auf, durch die die ebene Auflagefläche unterbrochen wird. Bei einer Lagerung im Freien sammelt sich hier Regen- oder Spritzwasser an, was einmal beim Weitertransport sehr störend ist und zum anderen auch, insbesondere bei empfindlichen Waren, Schäden hervorrufen kann. Insbesondere erfolgt auch eine wesentliche Erhöhung der Umgebungsfeuchtigkeit durch eine solche Wasserspeicherung. Außerdem muß bei einer Beschädigung der Palette die ganz Palette weggeworfen werden. Reparaturen sind praktisch nicht möglich.

Aus der EP-A-400 640 ist ebenfalls eine Palette bekannt. Platte und Standbeine werden dort zusammengesteckt und über ein Sicherungsblech gegen Lösen gesichert. Zusätzlich können noch ein Kleber, Heftklammern, Schrauben oder Nägel eingesetzt werden. Hier ist die Montage aufwendig und insbesondere bei Beschädigung eines Teils ist ein problemloser Austausch ohne Beschädigung des noch brauchbaren Teils kaum möglich. Bei dieser Palette sind zumindest im Bereich der Verbindung Platte Standbeine die Wandstärken stark unterschiedlich, es treten erhebliche Dickensprünge auf, die die Herstellung erschweren und durch die insbesondere oft Rißbildungen auftreten. Damit entsteht ein hoher Ausschußanteil und es fällt, insbesondere bei höheren Beanspruchungen, die zu erwartende Lebensdauer der so ausgebildeten Paletten stark ab.

Aufgabe der beiliegenden Erfindung ist es, eine Palette der eingangs genannten Art so auszubilden, daß unerwünschte Wasseransammlungen vermieden werden und bei einer Palettenbeschädigung eine einfache Reparatur ermöglicht wird.

Diese Aufgabe wird erfindungsgemäß mit einer Palette gemäß dem Anspruch 1 gelöst.

Durch die vorgeschlagenen Maßnahmen können häufig auftretende Beschädigungen der Standbeine beim Einfahren von Gabelstaplergabeln mit geringem Aufwand behoben werden. Auf der ebenen Auflagefläche können sich bei einer Wasserbenetzung keine Pfützen bilden, sondern das Wasser kann rasch abfließen.

Zum einfachen und raschen Austauschen beschädigter Standbeine werden die Haltevorsprünge in den Aufnahmeöffnungen einschnappbar verrastet, so daß eine Reparatur ohne Werkzeuge und insbesondere ohne Lösen und Wiederanziehen von Schrauben sehr zeitsparend ermöglicht ist.

Gewicht- und materialsparend werden die Standbeine im wesentlichen hohl ausgebildet, vorzugsweise mit einem Rechteckquerschnitt oder einem quadratischen Querschnitt. Zur Erhöhung der Festigkeit können die hohl ausgebildeten Standbeine einen die Standfestigkeit wesentlich erhöhenden Zwischenboden aufweisen. Weiter haben die Standbeine eine die Aufstandfläche bildende Randverstärkung aufweisen, vorzugsweise mit einem U-Querschnitt.

Zur weiteren Erhöhung der Standfestigkeit sind die in einer Reihe angeordneten Standbeine über einen Verbindungssteg im Bereich ihrer Standflächen miteinander verbunden, so daß zwischen den Verbindungsstegen und der Platte Einführöffnungen für die Gabel von Gabelstaplern frei bleiben. Der Verbindungssteg kann durch parallele Rippen verstärkt sein.

Eine besonders gute Kraftübertragung wird dadurch erreicht, daß eine Verlängerung des Zwischenbodens des Standbeins einen Stützabsatz bildet für die Abstützung eines Rands der schachtartigen Aufnahmeöffnungen der Platte.

Konstruktiv besonders einfach ist in mindestens einer Seitenwand der schachtartigen Aufnahmeöffnung ein vorzugsweise punkt- oder leistenförmiger Schnappvorsprung vorgesehen, der mit einer entsprechenden Ausnehmung des Haltevorsprungs des Standbeins zusammenwirkt oder umgekehrt.

Zur weiteren Versteifung und Gewichtseinsparung kann die Platte einen nach unten gezogenen Versteifungsrand aufweisen, wobei vorzugsweise alle Plattenteile etwa die gleiche Wandstärke haben.

Zur weiteren Erhöhung der Festigkeit kann die Platte auf ihrer Unterseite durch Rippen versteift sein, wobei auch diese Rippen die gleiche Wandstärke wie die übrigen Plattenteile aufweisen können.

Besonders vorteilhaft können die Rippen unter einem Winkel von etwa 45° gegenüber den Seitenrändern der Platte verlaufend, sich überschneidend angeordnet sein und es können zur weiteren Versteifung zusätzliche Rippen parallel zur Längserstreckung der Platte verlaufend vorgesehen sein, die vorzugsweise durch die Schnittpunkte der unter 45° verlaufenden Rippen geführt sind.

Weitere erfindungsgemäße Ausbildungen sind den Unteransprüchen zu entnehmen und werden mit ihren Vorteilen anhand der beigefügten Zeichnungen in der nachstehenden Beschreibung näher erläutert. Es zeigt:
- Figur 1: einen Teilquerschnitt durch eine Palette im Bereich eines Standbeins;
- Figur 2: eine Unteransicht eines Teils eines Standbeins;
- Figur 3: einen Teilquerschnitt mehrerer über Verbindungsstege miteinander verbundener Standbeine in kleinerem Maßstab und

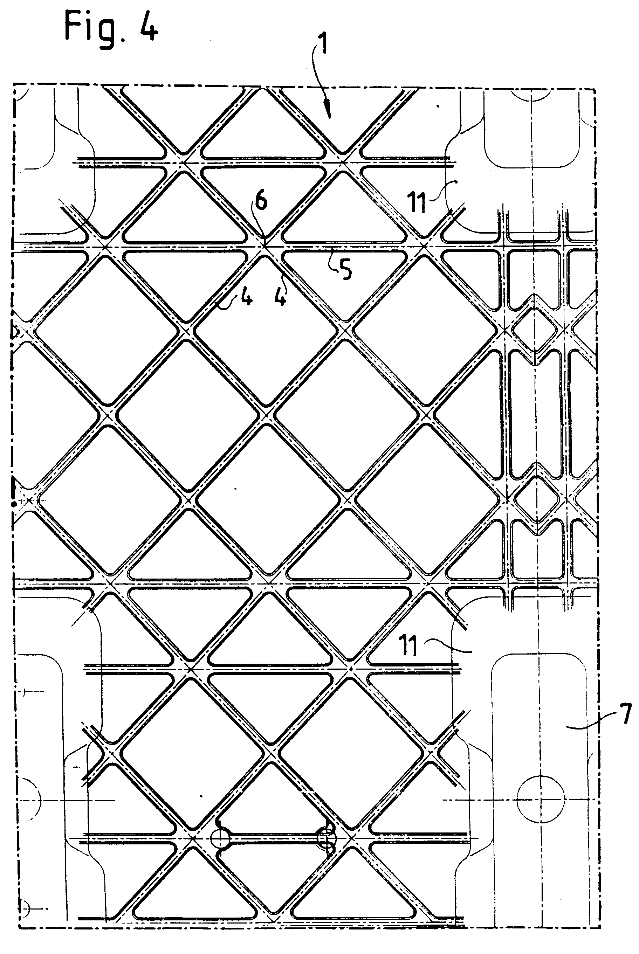

- Figur 4: eine Teilunteransicht der Platte einer Palette.

Beim dargestellten Ausführungsbeispiel besteht die Palette aus einer im wesentlichen eben ausgebildeten rechteckförmigen Platte 1 mit einer ebenen Auflagefläche 2 für zu transportierendes oder zu lagerndes Gut. Zur Versteifung weist diese Platte 1 einen rundum nach unten gezogenen Versteifungsrand 3 auf. Auf der Unterseite der Platte 1 sind weiter unter einem Winkel von 45° zu den Seitenflächen verlaufende Rippen vorgesehen, die durch zusätzlich parallel zur Längsseite der Platte 1 verlaufende Rippen 5 weiter versteift sind, wobei sich die Rippen 4 und 5 in Schnittpunkten 6 kreuzen.

Weiter sind auf der Unterseite der Platte 1 schachtartige Aufnahmeöffnungen 7 für jeweils ein Standbein 8 vorgesehen. Die Standbeine 8 selbst sind rechteckig hohl ausgebildet, sie weisen einen Zwischenboden 9 auf, dessen äußere Verlängerung einen Abstützabsatz 10 für einen Rand 11 der schachtartigen Aufnahmeöffnung 7 abgibt. Das Standbein 8 weist über dem Zwischenboden 9 einen Haltevorsprung 12 auf, der in eine der Aufnahmeöffnungen 7 der Platte 1 eingeschoben ist und über punkt- oder leistenförmige Schnappvorsprünge 13 und angepaßte Ausnehmungen 14 gehalten ist. Dabei können die Schnappvorsprünge 13 wie in Figur dargestellt in der Aufnahmeöffnung 7 der Platte 1 und die Ausnehmungen 14 am Haltevorsprung 13 angeordnet sein oder umgekehrt.

Auf ihrer Unterseite sind die im Querschnitt rechteckförmigen Standbeine 8 durch umlaufende Randverstärkungen 15 versteift, wobei diese Randverstärkungen 15 etwa einen U- oder V-Querschnitt aufweisen.

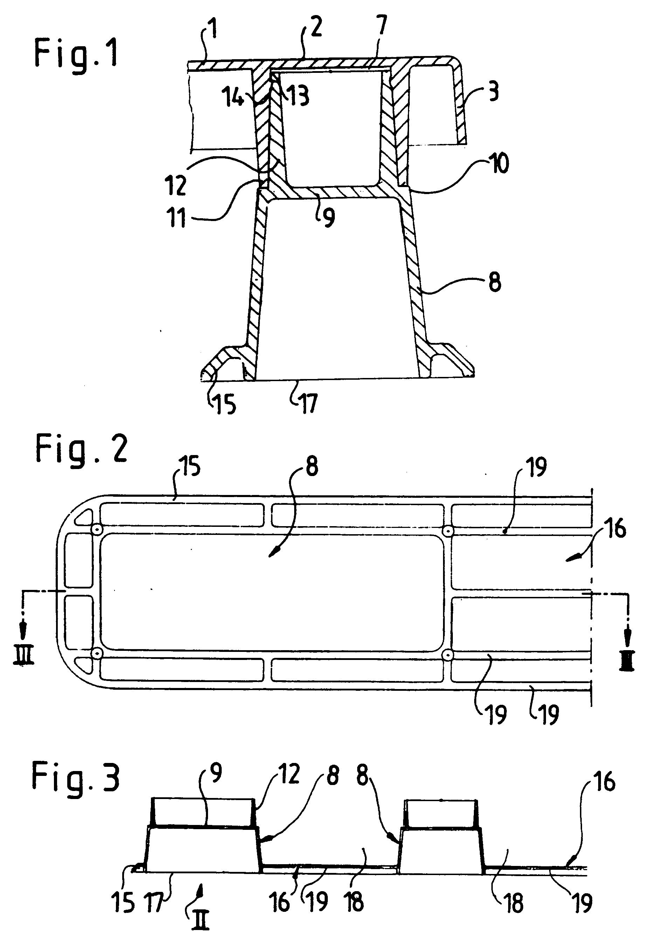

Die einzelnen Standbeine 8 einer Palettenseite sind, wie aus den Figuren 2 und 3 ersichtlich ist, durch Verbindungsstege 16 im Bereich der Aufstandsflächen 17 miteinander verbunden. Die Standbeine 8 und die Verbindungsstege 16 bilden zusammen mit Teilen der Platte 1 Gabeleinführzwischenräume 18 zum Einführen eines Zinkens einer Gabel eines Gabelstaplers.

Zur Versteifung der die Standbeine 8 verbindenden Verbindungsstege 16 können diese noch durch Rippen 19 versteift sein, wobei die Randverstärkung 15 der Standbeine 8 in den Verbindungsstegen 16 einfach weitergeführt ist.

Sowohl die Platte 1 als auch die Standbeine 8 sind aus nicht sortenreinen Recyclingkunststoffen hergestellt. Beschädigte Teile können nach dem Austausch wieder recycelt werden.

## Patentansprüche

1. Palette mit einer eine im wesentlichen ebene Auflagefläche (2) für zu transportierendes und/oder zu lagerndes Gut aufweisenden Platte (1), die auf ihrer Unterseite mindestens entlang des Außenumfangs ihrer im wesentlichen rechteckigen Grundfläche auf jeder Seite mindestens zwei, vorzugsweise drei, durch Gabeleinführzwischenräume (18) getrennte Standbeine (8) aufweist, wobei die Auflagefläche (2) der Platte (1) flächig eben ausgebildet ist, und die Standbeine (8) leicht austauschbar auf der Unterseite der Platte (1) gehalten sind und die Platte (1) Aufnahmeöffnungen (7) und die Standbeine angepaßte Haltevorsprünge (12) aufweisen und die Standbeine (8) im wesentlichen hohl ausgebildet sind und die in einer Reihe angeordneten Standbeine (8) über einen Verbindungssteg (16) im Bereich ihrer Standflächen (17) miteinander verbunden sind, wobei die Standbeine (8) eine Aufstandfläche (17) bildende Randverstärkung (15) aufweisen, die vorzugsweise einen U-Querschnitt aufweist, **dadurch gekennzeichnet**, daß die Palette aus nicht sortenreinen Recyclingkunststoffen hergestellt ist, daß die Haltevorsprünge (12) in den Aufnahmeöffnungen (7) einschnappbar verrastet sind und dazu in mindestens einer Seitenwand der schachtartigen Aufnahmeöffnungen (7) ein Schnappvorsprung (13) oder eine Ausnehmung vorgesehen ist, der mit einer entsprechenden Ausnehmung (14) oder einem Schnappvorsprung des Haltevorsprungs (12) des Standbeins (8) zusammenwirkt, daß die Standbeine (8) hohl mit dem Zwischenboden (9) ausgebildet sind und daß eine Verlängerung des Zwischenbodens (9) einen Abstützabsatz (10) bildet, für die Abstützung eines Rands (11) der schachtartigen Aufnahmeöffnung (7) der Platte (1), wobei der Rand (11) den Haltevorsprung (8) außen umgreift.

2. Palette nach Anspruch 1, dadurch gekennzeichnet, daß die Verbindungsstege (16) der Standbeine (8) durch Rippen (19) verstärkt sind.

3. Palette nach Anspruch 1 oder 2, dadurch gekennzeichnet, daß die Platte (1) einen nach unten gezogenen Versteifungsrand (3) aufweist und daS ferner die Platte (1) auf ihrer Unterseite durch Rippen (4,5) versteift ist und daß alle Plattenteile etwa die gleich Wandstärke aufweisen.

4. Palette nach Anspruch 3, dadurch gekennzeichnet, daß die Rippen (4) unter einem Winkel von etwa 45° gegenüber den Seitenrändern der Platte (1) verlaufend sich überschneidend angeordnet sind (Fig. 4).

5. Palette nach Anspruch 4, dadurch gekennzeichnet, daß zusätzlich parallel zur Längserstreckung der Platte (1) verlaufende Rippen (5) vorgesehen sind, die durch die Schnittpunkte (6) der unter 45° verlaufenden Rippen (4) geführt sind.

## Claims

1. A pallet comprising a plate (1) which has a substantially flat support surface (2) for material to be transported and/or stored and which on its underside at least along the outer periphery of its substantially rectangular base surface has on each side at least two and preferably three support legs (8) which are separated by fork-insertion intermediate spaces (18), wherein the support surface (2) of the plate (1) is flat over its area and the support legs (8) are easily interchangeably held on the underside of the plate (1) and the plate (1) has receiving openings (7) and the support legs have matching holding projections (12) and the support legs (8) are substantially hollow and the support legs (8) which are arranged in a row are connected together by way of a connecting web (16) in the region of their support surfaces (17), wherein the support legs (8) have an edge reinforcement (15) which forms the support surface (17) and which is preferably of a U-shaped cross-section, characterised in that the pallet is produced from recycled plastics materials of mixed kinds, that the holding projections (12) are located in the receiving openings (7) in snappable engagement therein and for that purpose provided in at least one side wall of the shaft-like receiving openings (7) is a snap projection (13) or a recess which cooperates with a corresponding recess (14) or a snap projection on the holding projection (12) of the support leg (8), that the support legs (8) are hollow with the intermediate wall portion (9) and that a prolongation of the intermediate wall portion (9) forms a support step (10) for supporting an edge (11) of the shaft-like receiving opening (7) of the plate (1), wherein the edge (11) eternally embraces the holding projection (12).

2. A pallet according to claim 1 characterised in that the connecting webs (16) of the support legs (8) are reinforced by ribs (19).

3. A pallet according to claim 1 or claim 2 characterised in that the plate (1) has a downwardly extended stiffening rim (3) and that in addition the plate (1) is stiffened on its underside by ribs (4, 5) and that all plate portions are of approximately the same gauge.

4. A pallet according to claim 3 characterised in that the ribs (4) are arranged in intercepting relationship extending at an angle of about 45° relative to the side edges of the plate (1) (Figure 4).

5. A pallet according to claim 4 characterised in that there are also provided ribs (5) which extend parallel to the longitudinal extent of the plate (1) and which are passed through the intersection points (6) of the ribs (4) which extend at an angle of 45°.

## Revendications

1. Palette avec une place de support (1) présentant une surface de support (2) sensiblement plane pour des marchandises à transporter et/ou à stocker et qui sur sa face inférieure au moins, sur la circonférence de sa surface de base sensiblement rectangulaire, présente de chaque côté au moins deux, de préférence trois montants (8) séparés par des espaces d'insertion de fourche (18), la surface de support (2) de la plaque de support (1) étant conçue comme une surface plane, et les montants (8) étant fixés sur la face inférieure de la plaque de support (1) tout en étant facilement remplaçables, la plaque de support (1) présentant des trous de positionnement (7), les montants présentant des éléments de maintien formant saillie (12) et adaptés, les montants (8) étant sensiblement creux, les montants (8) disposés en alignement étant assemblés les uns avec les autres dans la zone de leurs surfaces de pose (17), les montants (8) présentant un renforcement des bords (15) formant une surface de contact au sol (17) et présentant de préférence une section transversale en U, caractérisée en ce que la palette est réalisée en plastiques recyclés de qualités diverses, les éléments de maintien formant saillie (12) peuvent être encliquetés dans les trous de positionnement (7), et dans au moins uns paroi latérale des trous de positionnement (7) en forme de goulotte, est prévue une partie formant saillie et encliquetable (13) ou un creux qui agit simultanément avec un creux (14) correspondant ou une partie formant saillie et encliquetable de l'élément de maintien formant saillie (12) du montant (8), les montants (8) sont conçus en creux avec un fond intermédiaire (9) et un prolongement du fond intermédiaire (9) forme un patin d'appui (10), pour le support d'un bord (11) du trou de positionnement (7) en forme de goulotte de la plaque de support (1), le bord (11) enveloppant a l'extérieur l'élément de maintien formant saillie (12).

2. Palette selon la revendication 1, caractérisée an ce que les barrettes d'assemblage(16) des montants (8) sont renforcées par des nervures (19).

3. Palette selon la revendication 1 ou 2, caractérisée en ce que la plaque de support (1) présente un bord de renfort (3) s'étendent vers le bas et on ce que de plus, la plaque de support (1) est renforcée pur des nervures (4, 5) sur sa face inférieure et toutes les parties de la plaque présentent à peu près la même épaisseur de paroi.

4. Palette selon la revendication 3, caractérisée en ce que les nervures (4) sont disposées de manière à se recouper tout en formant un angle de 45° environ par rapport aux bords latéraux de la plaque de support (1) (figure 4).

5. Palette selon la revendication 4, caractérisée en ce que des nervures (5) parallèles à l'extension longitudinale de la plaque de support (1) sont prévues en plus et traversent les points d'intersection (6) des nervures (4) disposées selon un angle de 45°.
